# EUROPEAN PATENT APPLICATION

(11) **EP 1 429 411 A2**
(43) Date of publication of application: **16.06.2004**
(21) Application number: 03256865.1
(22) Date of filing: 30.10.2003
(51) Int. Cl.: H01M 8/12, H01M 4/88

(54) **Systems and methods for the fabrication of solid oxide fuel cell components using liquid spraying**

(30) Priority: 04.11.2002 US 287320
(71) Applicant: GENERAL ELECTRIC COMPANY, Schenectady, NY 12345 (US)
(72) Inventor: Lemmon, John P., Schoharie, New York 12157 (US); Thompson, Anthony, Niskayuna, New York 12309 (US); Wei, Chang, Niskayuna, New York 12309 (US)
(74) Representative: Goode, Ian Roy

(57) **Abstract**

High-throughput systems and methods for the fabrication and evaluation of electrolyte and electrode material performance for solid oxide fuel cells. Small scale techniques to optimize fuel cell materials based on chemical composition and variable processing. Methods for the fabrication and evaluation of electrode and electrolyte materials for use in solid oxide fuel cells comprising providing a non-sintered or partially-sintered substrate (106) and delivering the electrode and electrolyte materials to a plurality of regions of the substrate using a plurality of liquid spraying devices (110), wherein the plurality of liquid spraying devices (110) are arranged at appropriate angles to the substrate (106) and to each other such that the spray plumes of the spraying devices overlap to form a gradient array (102). Systems comprising a plurality of liquid spraying devices (110) and a mask (112) operable for controlling which of the plurality of regions of the substrate (106) receive the components.

## Description

The present invention relates generally to the field of combinatorial chemistry. More particularly, the present invention relates to high-throughput systems and methods for the fabrication of solid oxide fuel cell components using liquid spraying techniques.

A fuel cell is an energy conversion device capable of generating electricity and heat by electrochemically combining a gaseous fuel and an oxidizing gas via an ion-conducting electrolyte. The defining characteristic of a fuel cell is the ability to convert chemical energy directly into electrical energy without the need for combustion, giving much higher conversion efficiencies as compared to conventional methods. A fuel cell is mainly composed of an electrolyte and two electrodes, the anode and the cathode. The classification of fuel cells is generally done according to the nature of the electrolyte.

The electrolyte is operable for preventing the two electrodes from coming into electronic contact while allowing a flow of charged ions generated at the cathode to pass through it in order to be discharged at the anode. The nature of the electrolyte determines the operating temperature of the fuel cell. The function of the electrode is to bring about a reaction between the reactant (fuel) and the electrolyte, without itself being consumed or corroded. It must also, by definition, be an electronic conductor and bring the phases into contact.

There are many different types of fuel cells, and several parameters may vary depending on what the fuel cell is used for. For example, solid oxide fuel cells (SOFCs) are fuel cells constructed entirely from solid-state materials. SOFCs use an ion-conducting oxide ceramic as the electrolyte, and are operated in the range of about 900 °C to about 1000 °C. SOFCs provide several advantages compared to other fuel cell types, such as generating few problems with electrolyte management and having the highest efficiencies of all fuel cells (approximately 50-60%). SOFCs may be used in large-scale power generation, distributed power and vehicular applications.

One of the key challenges in developing a SOFC is developing high-performance electrode and electrolyte materials that meet SOFC performance and cost requirements. While there are lists of potential candidate materials for both electrodes and electrolytes, significant efforts are required to optimize material combinations, chemical compositions, processing conditions and the like. This is especially true as the vast majority of such potential candidate materials are either ternary or quaternary-based.

For example, yttrium-stabilized zirconium (YSZ) is commonly used as an electrolyte material in SOFCs. However, electrolyte performance is relatively sensitive to the ratio of Y to Zr, and this component ratio must be carefully optimized. The same is true for other potential candidate materials for electrolytes, including Sr-doped CeO2, CGO, and the like. Electrode material composition is also critical to the performance of a SOFC. For example, the composition of LaxSr1-xMnO (3-d) (LSM), a common cathode material, may greatly affect its electrical conductivity and electrochemical activity.

Typically, various combinations of elements or components with varying chemical compositions are individually formulated and tested in order to achieve optimal performance for electrode and electrolyte materials, a relatively slow, labor-intensive, and costly process. Thus, what are needed are high-throughput systems and methods that make SOFC-related material development more efficient. The systems and methods of the present invention use a combinatorial or small-scale approach to achieve the high-throughput fabrication, evaluation and optimization of electrode and electrolyte materials for use in SOFCs.

Likewise, although SOFCs are a promising technology for producing electrical energy from fuel with relatively high efficiency and low emissions, barriers to the widespread commercial use of SOFCs include their relatively high manufacturing cost and high operating temperatures. The manufacturing cost is driven primarily by the need for state-of-the-art, electrolyte-supported fuel cells capable of operating at relatively high temperatures (approximately 1000 °C). Manufacturing costs may be substantially reduced if the operating temperature could be lowered to below 800 °C, allowing the use of less expensive structural components, such as stainless steel. A lower operating temperature would also ensure a greater overall system efficiency and a reduction in the thermal stresses in the active ceramic structures, leading to longer life expectancies.

One of the barriers to a reduction in the operating temperature of SOFCs is the efficiency of the common cathode material, LSM. At intermediate temperatures, the cathodic polarization of LSM is relatively high, leading to large efficiency losses. Thus, new cathode compositions with lower activation polarizations are needed. However, standard ceramic processing techniques for fabricating new cathode compositions are time consuming and costly. Typically, new powder compositions are synthesized in a plurality of steps, including precipitation, filtration, and calcining. Because the microstructure (i.e., the porosity) of the cathode structure contributes substantially to its performance, careful processing of the powder must be performed in order to produce cathode structures with uniform microstructures. The expense associated with synthesizing such ceramic powders limits the number of cathode compositions that may be fabricated and evaluated.

Thus, what is needed are high-throughput systems and methods for the fabrication and evaluation of electrolyte and electrode material performance for solid oxide fuel cells. Further, what is needed are systems and methods to synthesize and optimize the performance of electrode and electrode-electrolyte combinations. Still further, what is needed are small scale techniques to optimize these materials based on chemical composition and variable processing. Rapid device performance methods coupled with structural and surface methods would allow for an increased discovery rate of new materials for SOFCs.

In various embodiments, the present invention provides high-throughput systems and methods for the fabrication and evaluation of electrode and electrolyte materials for use in solid oxide fuel cells ("SOFCs"). The present invention comprises systems and methods for synthesizing, evaluating, and optimizing the performance of such electrodes and electrode-electrolyte combinations and uses small-scale techniques to perform such synthesis, evaluation and optimization based on variable chemical composition and processing. Advantageously, rapid device performance systems and methods coupled with structural and surface systems and methods allow for increased rates of discovery for new materials and material combinations for use in SOFCs.

In various embodiments, the present invention further provides facile and rapid techniques for synthesizing multi-compositional inorganic materials generally. These techniques may be used to discover new inorganic materials for use in SOFCs (such as electrodes, electrolytes, interconnects, seals, and the like), phosphors, scintillators, PZT materials, and the like. The techniques allow for the synthesis and analysis of gradient or spatially resolved compositions that may be used to offset non-steady-state applications. The synthesis of these materials involves depositing materials using liquid spraying/nebulization techniques onto a substrate. By using a plurality of liquid spraying devices set at appropriate angles to each other and to the substrate, a gradient array is created. Discreet or continuous gradient arrays may be created by controlled liquid flow rates.

In one embodiment of the present invention, a method for the fabrication of an array of electrode or electrolyte materials suitable for use in a solid oxide fuel cell comprises providing a non-sintered or partially-sintered substrate, delivering electrode and electrolyte materials to a plurality of regions of the substrate using a plurality of liquid spraying devices, wherein the plurality of liquid spraying devices are arranged at appropriate angles to the substrate and to each other such that the spray plumes of the spraying devices overlap to form a gradient array, and sintering the substrate. In one embodiment, the plurality of liquid spraying devices are held stationary and the substrate is able to move in an x-y coordinate space using an x-y stage. In an alternative embodiment, the substrate is held stationary and the plurality of liquid spraying devices are able to move in an x-y coordinate space. In a further embodiment, both the substrate and the devices are able to move.

In a still further embodiment of the present invention, a system for the fabrication and evaluation of electrode and electrolyte materials suitable for use in solid oxide fuel cells comprises a plurality of liquid spraying devices operable for delivering solid oxide fuel cell components to a plurality of regions of a substrate to create a gradient array and a mask operable for controlling which of the plurality of regions of the substrate receive the components, wherein outlets of the liquid spraying apparatuses are arranged at appropriate angles to each other and to the substrate such that the spray plumes of the apparatuses overlap to form the gradient array. In several examples, the gradient array produced by the systems of the present invention comprise ternary, quaternary or any other array comprised of 2 or more components.

In a still further embodiment of the present invention, a high-throughput system operable for fabricating a gradient array of materials suitable for use in a solid oxide fuel cell, wherein each of a plurality of members of the array of materials may be evaluated for its relative performance.

A variety of specific embodiments of this invention will now be illustrated with reference to the accompanying drawings, in which:
Figure 1 is a schematic diagram of a spraying/nebulization system for creating a gradient array for testing the performance of solid oxide fuel cell components in accordance with an exemplary embodiment of the present invention; and
Figure 2 is a schematic diagram illustrating a gradient array in accordance with an exemplary embodiment of the present invention.

As required, detailed embodiments of the present invention are disclosed herein, however, it is to be understood that the disclosed embodiments are merely exemplary of the invention that may be embodied in various and alternative forms. Specific structural and functional details disclosed herein are not to be interpreted as limiting, but merely as a basis for the claims as a representative basis for teaching one skilled in the art to variously employ the present invention. The methods and systems described below apply to the high-throughput fabrication and measurement of solid oxide fuel cell components, however, in principle also apply to any high-throughput technique employing liquid spraying.

The present invention provides systems and methods that use a combinatorial chemistry approach to achieve the high-throughput fabrication and evaluation of gradient arrays of electrode and electrolyte materials for use in solid oxide fuel cells ("SOFCs"). The present invention provides systems and methods to synthesize and optimize the performance of electrodes and electrode-electrolyte combinations. The spray techniques described below may be used to investigate suitable electrode and electrolyte materials necessary for SOFCs.

In one embodiment, the systems and methods of the present invention are based on the use of a liquid spraying technique that relies on propulsive forces to create gradient arrays of varying chemical compositions. This technique allows for the equal distribution of metal salt mixtures or combinations of metal salt mixtures onto a substrate. When applied with a plurality of liquid sprayers/nebulizers, a ternary, quaternary or any other gradient array may be produced. When applied to a substrate, the systems and methods of the present invention allow for the addition of chemical species that may enhance a physical or chemical property once the material is sintered. Physical properties that may be affected include, for example, electrical or ionic conductivity, pore size and pore density.

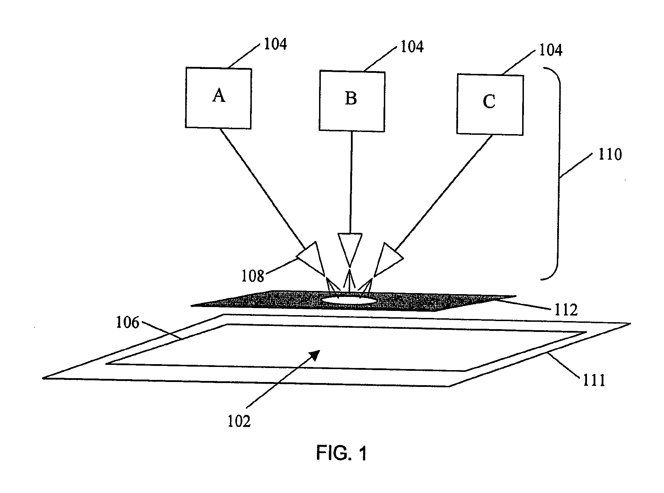

Referring now to FIG. 1, in one embodiment of the present invention, a liquid spraying/nebulization system for the fabrication of a gradient array 102 of electrode or electrolyte materials for use in SOFCs includes a plurality of materials 104 (materials A, B, and C are shown) suitable for delivery to the surface of a substrate 106. The plurality of materials 104 may form either a discrete or a continuous gradient array of materials acted on, with or within the reactive or unreactive substrate 106. The gradient array 102 is produced by placing the nozzles 108 of a plurality of liquid delivery apparatuses 110 at appropriate angles to the substrate 106 and to each other, such that the spray plume of the delivery apparatuses 110 overlap to form a desired gradient mixture.

The substrate 106 may be a material having a rigid or semi-rigid surface. In several embodiments, at least one surface of the substrate 106 will be substantially flat. The substrate 106 may comprise physical separations between testing regions for different SOFC materials. The substrate 106 may comprise, for example, porous or dense yttrium-stabilized zirconium ("YSZ"), a green ceramic, a plastic coated ceramic, a platinum metal, or the like. The surface area of the substrate is designed to meet the requirements of a particular application. Preferably, the surface area of the substrate 106 is in the range of 1 cm² to 50 cm², more preferably, in the range of 30 cm² to 40 cm². For the evaluation of electrode materials for use in SOFCs, a Fe-Cr alloy or a conductive ceramic, such as LaCrO3or platinum metal, may be used for the array electrodes. For the evaluation of electrolyte materials for use in SOFCs, a LaxSr1-xMnO (3-d) ("LSM")-coated Fe-Cr alloy, platinum metal, or LaCrO3 may be used for the array electrodes.

A predetermined region on the substrate is a localized area that is, was, or is intended to be used for the deposition of a specific solid oxide fuel cell component. The predetermined region may have any convenient shape, e.g., linear, circular, rectangular, elliptical or wedge-shaped. The region may be identified with a marker, such as a tag or bar code that may be used to identify which components were deposited onto which predetermined region on the substrate 106. The surface area, number of regions and locations of the predetermined regions depend up on the particular application.

The delivery apparatuses 110 operable for delivering one or more materials to the surface of the substrate 106 in liquid form are positioned above or adjacent to the surface of the substrate 106. Each of the plurality of delivery apparatuses 110 may comprise a nebulizer, sprayer, plain or plasma, or any other liquid sprayer known in the art. The delivery apparatuses 110 work via positive pressure, expelling the one or more materials towards the surface of the substrate 106 via the nozzles 108. The delivery apparatuses 110 are arranged in such a way, as is illustrated in FIG. 1 for example, such that a ternary, quaternary or other gradient array 102 is created. Preferably, the delivery apparatuses 110 are movable relative to the surface of the substrate 106, such that the one or more materials may be delivered to specific predetermined regions of the surface of the substrate 106. Optionally, these predetermined regions may correspond to the locations of a plurality of holes or openings of a mask 112. The one or more materials deposited onto the substrate 106 form the gradient array 102 of SOFC components.

The substrate 106 may be disposed on top of or adjacent to the mask 112. Typically, the mask 112 comprises a plate, sheet, film, coating or the like having a plurality of holes (not shown) disposed there through or openings (not shown) disposed therein. Each of the plurality of holes or openings may be, for example, substantially circular, oblong, square, rectangular, triangular or a more complex shape. The mask 112 is disposed adjacent to a surface of the substrate 106 such that material passing through each of the plurality of holes is selectively prevented or shielded from contacting predetermined regions of the surface of the substrate 106.

Predetermined combinations of the plurality of materials 104 may be formed by selectively controlling the flow rates of each of the plurality of materials 102 to the liquid delivery apparatuses 110 and/or the nozzles 108. Thus, the predetermined combinations of the plurality of materials 104 may vary discretely or continuously as a function of spray control and substrate position.

The plurality of materials 104 forms the gradient array 102 of electrode or electrolyte materials by being sprayed onto predetermined regions of the substrate 106. Thus, the plurality of materials 104 may form, for example, a discrete array of electrode materials separated by electrolyte material, a continuous array of electrode materials, a discrete array of electrolyte materials, a continuous array of electrolyte materials, or any combination thereof. The gradient array comprises an array of cathode materials, and wherein the array of cathode materials is between about 700 and 2,000 microns in diameter and about 1,000 microns in thickness.

In one embodiment, one spray nozzle 108 may be held stationary while a target substrate 106 has the capability to move in an x-y coordinate space, using a programmable x-y stage 111. A continuous compositional gradient may be created by applying different feed rates to 2 or more metal containing solutions and simultaneously moving the target in either the x or y direction. This embodiment enables thin film synthesis with controlled and continuous variation in concentration and composition without the use of a high-vacuum apparatus.

For electrolyte investigations, a maskless approach may be employed. In this embodiment, a decomposable substrate allows for the formation of a gradient solid. Sputtering a metal on one side of the ceramic substrate creates a common electrode, sputtering an array of discrete metal contacts on the other side, using the mask 112, isolates a compositional spot between the two electrodes for electrochemical characterization. For cathode materials, a similar approach may be performed by spraying either discrete or continuous gradient mixtures on an anode-electrolyte substrate. The anode provides a general common for each cell while a metal contact may be sputtered onto the cathode materials using the mask 112. Such a design allows for the electrochemical evaluation of the materials under fuel containing conditions.

The plurality of materials 104 comprises SOFC components, the individual substances that are deposited onto the substrate 106. The components may act upon one another to produce a particular material. Components may react directly with each other or with an external energy source such as thermal radiation. An additional material or a chemical substance present in the substrate 106 or added to the components may also act upon the components. The components form layers, blends, mixtures or combinations thereof. The plurality of materials 104 may comprise, for example, a plurality of materials suitable for providing predetermined metal ions, metal cations, combinations of metal ions, and/or combinations of metal cations to the surface of the substrate 106, such as metal oxides, metal carbonates, metal salts and the like. The plurality of materials 104 may comprise metal solutions that contain metals for bulk and dopant purposes, along with organic binders or polymers for structural variation. Other suitable materials known to those of ordinary skill in the art may also be used for both the electrodes and the electrolytes. The plurality of materials 104 may further include binders and/or carrier materials to enhance the coating and/or infiltrating processes.

The components or combination of components that have been deposited onto a predefined region of the substrate 104 comprise a layer, blend or mixture of components in the form of a gradient array. Each component in the mixture may be independently varied. A mixture may comprise two or more substances. The resulting materials of the gradient array are screened for specific properties or characteristics to determine their relative performance.

Optionally, the substrate 106 may be partially sintered. The system for the fabrication of the gradient array 102 of electrode or electrolyte materials for use in SOFCs may also include a temperature control device for heating the array of electrode or electrolyte materials, thereby sintering the array of electrode or electrolyte materials to remove any binders and/or carrier materials prior to SOFC evaluation. Sintering of the metal salt mixtures may take place in-situ with spraying, however, in most cases, post-spray sintering may be necessary.

In another exemplary embodiment, an array of electro-active materials may be formed as described above. However, before sintering and before or after compositional doping, a chemical agent may be added to a spot of interest in an attempt to influence change in the microstructure of that spot. For example, an agent may be added that, after sintering, allows for variable control of porosity or packing density. This allows for both compositional and micro-structural control on a small scale. Relationships between microstructure, composition, and material performance may thus be discovered and optimized rapidly.

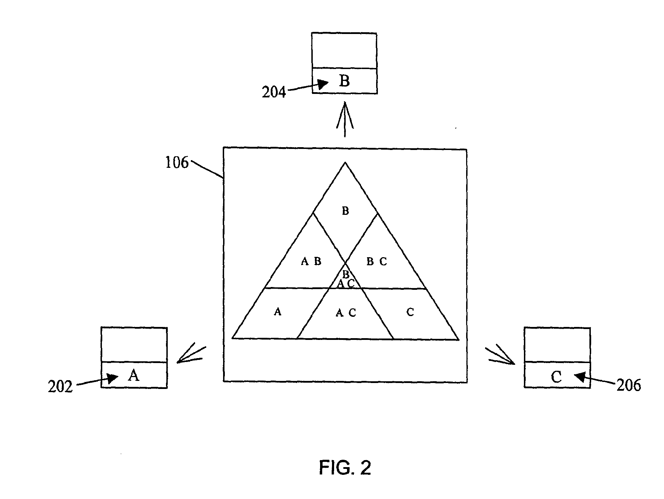

Referring now to FIG. 2, the system of the present invention includes a plurality of materials, A 202, B 204 and C 206 in the example provided, disposed within a plurality of liquid spraying devices collectively operable for delivering SOFC components to the surface of a substrate 106 to form a discrete or continuous compositional gradient array of material. As illustrated, regions of individual materials and combinations of materials are created. As described above, the plurality of materials may be, for example, a plurality of insoluble metal oxides, metal carbonates, ammonium slurries, or the like. Optionally, the plurality of materials may also include a plurality of binders and/or dispersing agents. The compositional gradient array may be captured spatially using a programmable x-y stage or the like, either coupled to and acting on the substrate 106 or the liquid spraying devices. The x-y stage may also be operable for coordinating the deposition rate of the combination of the plurality of materials with the rate of motion of the substrate 106. Discrete compositions may be created by interrupting the flow coordinated with the x-y stage.

The systems and methods of the present invention describe the creation of a multi-composition cell, which allows for the rapid study of cathode and anode materials suitable for use in SOFCs. By spraying an anode of a uniform material with a common cathode material, different regions of the multi-composition cell may be measured and regions evaluated for performance. Performance to composition may determined rapidly using a multi-channel or multi-electrode analyzer.

Preferably, the system for the evaluation of an array of electrode or electrolyte materials for use in SOFCs also includes a testing device 114 operably coupled to each of a plurality of regions of the substrate 106 via one or more leads, probes, sensors, or the like, referred to herein as one or more sampling mechanisms 116. The testing device 114 gathers data from the one or more sampling mechanisms 116 and, optionally, in combination with a computer 118, evaluates and compares the relative performance of each member of the gradient array 102. The testing device 114 and the computer 118 may comprise a multi-channel electrochemical workstation capable of sampling each member of the array 102 in series or in parallel. For the evaluation of electrode materials for use in SOFCs, electrical resistance, over-potential, polarization current or the like may be measured, evaluated, and compared. Each of the individual materials may be screened or interrogated for the same material characteristic. For example, over-potential may be measured using a constant-current approach. Polarization current may be measured using a constant-voltage approach. For the evaluation of electrolyte materials for use in SOFCs, ionic resistance, open circuit voltage, or the like may be measured, evaluated, and compared using an alternating-current ("AC") impedance analyzer, a potentiastat or the like. Preferably, with respect to the measurement of ionic resistance, it is measured using electrochemical impedance spectroscopy at a single frequency. Other measurement, evaluation, and comparison tools and techniques related to the performance of electrodes, electrolytes, and SOFCs are known to those of ordinary skill in the art and may be implemented in conjunction with the systems and methods of the present invention. Such tools and techniques may also be implemented in conjunction with an environmental control device operable for isolating the array of electrodes, electrolytes, or SOFCs from the surrounding environment. Once screened, the individual materials may be ranked or otherwise compared relative to each other with respect to a material characteristic under investigation.

In a further embodiment of the present invention, a method for the fabrication and evaluation of an array of electrode or electrolyte materials for use in SOFCs comprises providing a plurality of materials suitable for delivery to the surface of a substrate. As described above, the plurality of materials may form a gradient coating in the form of a gradient array on the surface of the substrate or, alternatively, they may infiltrate the substrate, forming an array of electrode or electrolyte materials suitable for evaluation. The plurality of materials may form the array of electrode or electrolyte materials by selectively altering the chemical composition and/or physical microstructure of each of a plurality of regions of the substrate.

To deliver the plurality of materials to the surface of the substrate, the materials are sprayed onto the substrate using a plurality of liquid delivery apparatuses 110 arranged at predetermined angles to each other and to the substrate 106. The apparatuses 110 may be positioned to obtain a desired gradient array pattern, such as a ternary or a quaternary pattern. As described above, the delivery apparatuses 110 may comprise, for example, a nebulizer or a liquid spraying device. Preferably, the delivery apparatuses 110 are movable relative to the surface of the substrate 106, either via movement of the delivery apparatuses or via movement of the substrate, such as through the use of a movable stage or the like. The predetermined combinations of the plurality of materials may vary discretely or continuously as a function of substrate position.

Generally, the array of materials is prepared by delivering SOFC components to predetermined regions on the substrate 106. In one embodiment, for example, a first component is delivered to a first predetermined region on a substrate, a second component is delivered to a second predetermined region on the same substrate, and a third component is delivered to a third predetermined region on the same substrate. This process continues for additional components (e.g., fourth, fifth, etc. components) and/or the other materials (e.g., fourth, fifth, etc. materials) until the array is complete. In yet another embodiment, the array is formed as previously described, but after the various components are delivered to the substrate 106, a processing step is carried out which allows or causes the components to interact to form layers, blends, mixtures, and/or materials resulting from a reaction between components. in still another embodiment, two or more components may be delivered to the predefined regions on the substrate using a parallel delivery technique, such that the components interact with each other before contacting the substrate 106. Each component may be delivered in either a uniform or gradient fashion to produce either a single stoichiometry or, alternatively, a large number of stoichiometries within a single predefined region.

Generally, physical masking systems may be employed in combination with various deposition techniques in order to apply components onto the substrate 106 in a combinatorial fashion, thereby creating arrays of resulting materials at predetermined locations on the substrate 106. The arrays of component materials will usually differ in thickness across the substrate 106. The components can, for example, be dispensed to the substrate 106 in the form of a gas, a liquid or a powder. Suitable deposition techniques include, but are not limited to, sputtering, spray-coating and discrete liquid dispensing techniques (e.g. pipettes, syringes, etc.). Additionally, such dispensing systems may be manual or, alternatively, may be automated using, for example, robotics techniques.

With the synthesis of materials for SOFCs, both chemical composition and microstructure are important variables. Producing a gradient array 102 with the methods and systems of the present invention promotes the replication of compositional libraries, thus opportunities for processing with multiple variables and microstructure control are feasible. Replication of the arrays allows for the investigation of multi-processing variables. The individual compositions in a given array may be tested for conductivity and for catalytic activity in the presence of oxygen by monitoring the overpotential at various temperatures using a multi-probe instrument. Subsequent results allow for the ranking of composition and processing based on performance measurements. Materials with promising results may be further characterized in order to relate physical microstructure and performance using micro XRD, XRF, and TOF-SIMMS.

It is apparent that there have been provided, in accordance with the systems and methods of the present invention, high-throughput techniques for the fabrication and evaluation of arrays of electrode and electrolyte materials for use in solid oxide fuel cells.

For completeness, various aspects of the invention are set out in the following numbered clauses:
1. A method for the fabrication and evaluation of electrode and electrolyte materials for use in solid oxide fuel cells, the method comprising:
   providing a non-sintered or partially-sintered substrate (106); and
   delivering the electrode and electrolyte materials to a plurality of regions of the substrate (106) using a plurality of liquid spraying devices (110), wherein the plurality of liquid spraying devices (110) are arranged at appropriate angles to the substrate (106) and to each other such that the spray plumes of the spraying devices (110) overlap to form a gradient array (102).
2. The method of clause 1, wherein the plurality of liquid spraying devices (110) are held stationary and the substrate (106) is capable of movement in an x-y coordinate space using an x-y stage (111).
3. The method of clause 1, wherein the substrate (106) is held stationary and the plurality of liquid spraying devices (110) are capable of movement in an x-y coordinate space using an x-y stage (111).
4. The method of clause 1, wherein the gradient array (102) is discreet or continuous.
5. The method of clause 1, wherein feed rates of the plurality of liquid spraying devices (110) may be controlled.
6. The method of clause 1, further comprising using a mask (112) to isolate a compositional spot between two electrodes for electrochemical characterization.
7. The method of clause 1, wherein cathode materials are characterized by spraying either discreet or continuous gradient mixtures on an anode-electrolyte substrate (106).
8. The method of clause 1, wherein the substrate (106) comprises a substrate (106) selected from the group consisting of a porous substrate (106) and a nonporous substrate (106).
9. The method of clause 1, further comprising distributing a chemical species into the substrate (106), wherein the chemical species alters a physical or chemical property of each of the plurality of regions of differing chemical composition when sintered.
10. The method of clause 9, wherein distributing the chemical species into the substrate (106) comprises distributing a chemical species selected from the group consisting of metal ions, metal cations, a combination of metal ions, and a combination of metal cations into the substrate (106).
11. The method of clause 1, wherein the gradient array (102) comprises an array of cathode materials, and wherein the array of cathode materials is between about 700 and 2,000 microns in diameter and about 1,000 microns in thickness.
12. The method of clause 1, further comprising testing each of the plurality of regions of differing chemical composition for electrical conductivity and electrochemical activity.
13. The method of clause 12, further comprising ranking the chemical composition and processing conditions of each of the plurality of regions of differing chemical composition in relation to their suitability for use in solid oxide fuel cells using the test results.
14. The method of clause 1, wherein the plurality of liquid spraying devices (110) comprise at least one of the following: a plain sprayer, a plasma sprayer and a nebulizer.
15. A system for the fabrication and evaluation of electrode and electrolyte materials suitable for use in solid oxide fuel cells, the system comprising:
   a plurality of liquid spraying devices (110) operable for delivering solid oxide fuel cell components to a plurality of regions of a substrate (106) to create a gradient array (102); and
   a mask (112) operable for controlling which of the plurality of regions of the substrate (106) receive the components;
   wherein outlets of the liquid spraying apparatuses (110) are arranged at appropriate angles to each other and to the substrate (106) such that the spray plumes of the apparatuses (110) overlap to form the gradient array (102).
16. The system of clause 15, wherein the gradient array (102) comprises a ternary, quaternary or any other array comprised of 2 or more components.
17. The system of clause 15, wherein the plurality of liquid spraying devices (110) are held stationary and the substrate (106) is capable of movement in an x-y coordinate space.
18. The system of clause 15, wherein the substrate (106) is held stationary and the plurality of liquid spraying devices (110) are capable of movement in an x-y coordinate space.
19. The system of clause 15, wherein the gradient array (102) is discreet or continuous.
20. The system of clause 15, wherein feed rates of the plurality of liquid spraying devices (110) may be controlled.
21. The system of clause 15, wherein the mask (112) is operable for isolating a compositional spot between two electrodes for electrochemical characterization.
22. The system of clause 15, wherein cathode materials are characterized by spraying either discreet or continuous gradient mixtures on an anode-electrolyte substrate (106).
23. The system of clause 23, wherein the substrate (106) comprises a substrate (106) selected from the group consisting of a porous substrate (106) and a nonporous substrate (106).
24. The system of clause 15, wherein the substrate (106) comprises a chemical species that alters a physical or chemical property of each of the plurality of regions of differing chemical composition when sintered.
25. The system of clause 24, wherein the chemical species is selected from the group consisting of metal ions, metal cations, a combination of metal ions, and a combination of metal cations into the substrate (106).
26. The system of clause 15, wherein the gradient array (102) comprises an array of cathode materials, and wherein the array of cathode materials is between about 700 and 2,000 microns in diameter and about 1,000 microns in thickness.
27. The system of clause 15, wherein the gradient array (102) is tested for regions of differing electrical conductivity and electrochemical activity.
28. The system of clause 15, wherein the plurality of liquid spraying devices (110) comprise at least one of the following: a plain sprayer, a plasma sprayer and a nebulizer.

## Claims

1. A method for the fabrication and evaluation of electrode and electrolyte materials for use in solid oxide fuel cells, the method comprising:
providing a non-sintered or partially-sintered substrate (106); and
delivering the electrode and electrolyte materials to a plurality of regions of the substrate (106) using a plurality of liquid spraying devices (110), wherein the plurality of liquid spraying devices (110) are arranged at appropriate angles to the substrate (106) and to each other such that the spray plumes of the spraying devices (110) overlap to form a gradient array (102).

2. The method of claim 1, wherein the plurality of liquid spraying devices (110) are held stationary and the substrate (106) is capable of movement in an x-y coordinate space using an x-y stage (111).

3. The method of claim 1, wherein the substrate (106) is held stationary and the plurality of liquid spraying devices (110) are capable of movement in an x-y coordinate space using an x-y stage (111).

4. The method of claim 1, further comprising using a mask (112) to isolate a compositional spot between two electrodes for electrochemical characterization.

5. The method of claim 1, further comprising distributing a chemical species into the substrate (106), wherein the chemical species alters a physical or chemical property of each of the plurality of regions of differing chemical composition when sintered.

6. The method of claim 1, further comprising testing each of the plurality of regions of differing chemical composition for electrical conductivity and electrochemical activity.

7. A system for the fabrication and evaluation of electrode and electrolyte materials suitable for use in solid oxide fuel cells, the system comprising:
a plurality of liquid spraying devices (110) operable for delivering solid oxide fuel cell components to a plurality of regions of a substrate (106) to create a gradient array (102); and
a mask (112) operable for controlling which of the plurality of regions of the substrate (106) receive the components;
wherein outlets of the liquid spraying apparatuses (110) are arranged at appropriate angles to each other and to the substrate (106) such that the spray plumes of the apparatuses (110) overlap to form the gradient array (102).

8. The system of claim 7, wherein the gradient array (102) comprises a ternary, quaternary or any other array comprised of 2 or more components.

9. The system of claim 7, wherein the substrate (106) comprises a chemical species that alters a physical or chemical property of each of the plurality of regions of differing chemical composition when sintered.

10. The system of claim 7, wherein the gradient array (102) comprises an array of cathode materials, and wherein the array of cathode materials is between about 700 and 2,000 microns in diameter and about 1,000 microns in thickness.
